# EUROPEAN PATENT SPECIFICATION

(11) **EP 2 138 331 B1**
(45) Date of publication and mention of the grant of the patent: **16.05.2012**
(21) Application number: 09006996.4
(22) Date of filing: 26.05.2009
(51) Int. Cl.: B60C 19/00, B29D 30/00

(54) **Method for manufacturing pneumatic tire**
Verfahren zur Herstellung von pneumatischen Reifen
Procédé de fabrication de pneumatique

(30) Priority: 17.06.2008 JP 2008158268
(43) Date of publication of application: 30.12.2009
(73) Proprietor: The Yokohama Rubber Co., Ltd., Minato-ku Tokyo 105-8685 (JP)
(72) Inventor: Kuramori, Akira, Hiratsuka-shi Kanagawa 254-8601 (JP)
(74) Representative: HOFFMANN EITLE

(56) References cited:
- EP-A- 1 454 732
- EP-A- 1 676 722
- EP-A- 1 777 081
- EP-A- 1 800 845
- WO-A-2006/118198
- DE-A1- 19 806 935

## Description

### BACKGROUND OF THE INVETNION

The present invention relates to a method for manufacturing a pneumatic tire including a sound-absorbing member made of a porous material on an inner surface of the tire. More specifically, the present invention relates to a method for manufacturing a pneumatic tire, the method enabling a sound-absorbing member to be easily mounted on the tire with an improved fixation of the sound-absorbing member onto an inner surface of the tire.

In pneumatic tires, one of the causes of noise generated is a cavity resonance sound, which is caused by vibration of air filled inside the tire. When a tire is rotating on a road surface, a tread portion of the tire vibrates due to unevenness of the road surface. The vibration of the tread portion then vibrates air inside the tire, so that the cavity resonance sound is generated.

One of the approaches proposed for reducing noise due to such a cavity resonance phenomenon is to dispose a sound-absorbing member in a cavity formed between a tire and a rim of a wheel. In this approach, if the sound-absorbing member is attached to an outer peripheral surface of the rim of the wheel, the sound-absorbing member interferes with the operation of mounting the tire on the rim. By contrast, if the sound-absorbing member is attached onto an inner surface of the tire (see, for example, Japanese patent application *Kokai* publication Nos. 2003-63208 and 2003-48407), a problem is the durability. Specifically, when a sound-absorbing member made of a porous material such as a urethane foam is fixed onto an inner surface of a tire by using a rubber-based adhesive agent or an adhesive tape, the sound-absorbing member is sometimes detached from the inner surface of the tire because of lack of adhesion. In particular, since a release agent at a curing process remains on the inner surface of the tire, the presence of the release agent possibly causes deterioration of fixation of the sound-absorbing member. Meanwhile, if the sound-absorbing member is fixed after the release agent remaining on the inner surface of the tire is removed, the operation of mounting the sound-absorbing member becomes very complicated though the fixation of the sound-absorbing member is improved.
DE 19806935 A1; EP-A-1 676 722 and WO 2006/118198 A disclose prior art tires, but fail to disclose manufacturing methods in which a sound-absorbing member is fixed onto the inner liner layer and made of a porous material, and thereafter the green tire so formed is cured.

### SUMMARY OF THE INVENTION

An advantage obtainable with embodiments of the present invention is to provide a method for manufacturing a pneumatic tire, the method enabling a sound-absorbing member to be easily mounted on the tire with an improved fixation of the sound-absorbing member onto an inner surface of the tire.

The method for manufacturing a pneumatic tire of the present invention includes the steps of: forming a green tire including an inner liner layer and a sound-absorbing member, the inner liner layer disposed in an inner surface of the tire and made of any one of a thermoplastic resin and a thermoplastic elastomer composition obtained by dispersing an elastomer in a thermoplastic resin, the sound-absorbing member fixed onto the inner liner layer and made of a porous material; and thereafter curing the green tire.

According to the present invention, the sound-absorbing member made of a porous material is fixed onto the inner liner layer containing a thermoplastic resin as the matrix in the formation of the green tire, and thereafter, the green tire is cured. Accordingly, it is possible to firmly fix the inner liner layer and the sound-absorbing member to each other with no presence of a release agent therebetween. Moreover, since there is no need to remove a release agent from the inner surface of the tire unlike the case where a sound-absorbing member is attached to an inner surface of a tire after a curing process, the operation of mounting the sound-absorbing member is facilitated.

In the present invention, the green tire is preferably cured by a bladderless curing system. Employing the bladderless curing system makes it possible to prevent the sound-absorbing member disposed on the inner surface of the green tire from collapsing in the curing process.

As the porous material of the sound-absorbing member, it is preferable to use a urethane foam having open cells therein. In particular, a ratio of a tear strength (N/cm²) to an apparent density (kg/m³) of the urethane foam is preferably 0.15 or more. The urethane foam having such properties is effective as the sound-absorbing member disposed on the inner surface of the tire. In addition, the sound-absorbing member is preferably disposed on the inner surface of the tire in a region corresponding to a tread portion in such a manner as to extend over an entire circumference of the tire. This makes it possible to achieve a favorable sound-absorbing effect.

The sound-absorbing member is preferably fixed onto the inner liner layer by a flame lamination process. According to the flame lamination process, it is possible to easily and firmly fix the sound-absorbing member onto the inner liner layer, and thus to improve the durability of the sound-absorbing member. Alternatively, the sound-absorbing member may be fixed onto the inner liner layer with an adhesive agent.

It is preferable that, in the step of forming the green tire, the inner liner layer is first formed by winding an inner liner member on an outer peripheral side of a making drum, the inner liner member having the sound-absorbing member previously fixed thereto; a carcass layer is then formed by winding a carcass member on an outer peripheral side of the inner liner layer; and thereafter, a cylindrical intermediate formed body including the inner liner layer and the carcass layer is inflated, so that the green tire is formed. Specifically, using the inner liner member having the sound-absorbing member previously fixed thereto significantly facilitates the operation of mounting the sound-absorbing member. In this case, however, the sound-absorbing member is required to have an elongation property larger than a lift rate of the carcass layer.

### BRIEF DESCRIPTION OF THE DRAWINGS

To enable a better understanding of the present invention, and to show how the same may be carried into effect, reference will now be made, by way of example only, to the accompanying drawings, in which:-

Fig. 1 is a perspective cross-sectional view illustrating a pneumatic tire of the kind to be manufactured according to an embodiment of the present invention; and

Fig. 2 is a perspective cross-sectional view illustrating a green tire in the process of manufacturing the pneumatic tire illustrated in Fig. 1.

### DETAILED DESCRIPTION

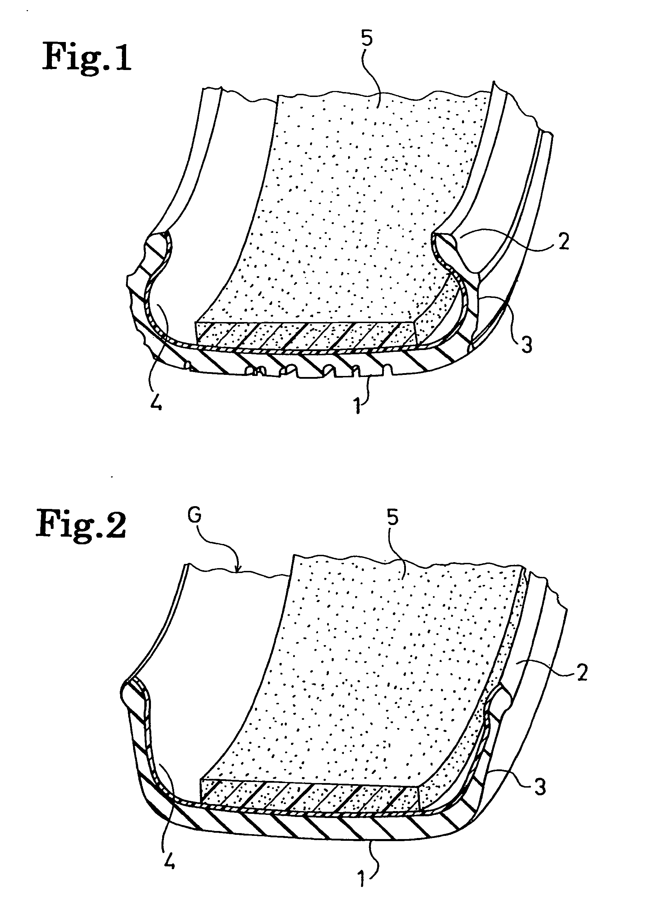

Hereinafter, a configuration of the present invention will be described in detail with reference to the attached drawings. Fig. 1 illustrates a pneumatic tire according to an embodiment of the present invention. In Fig. 1, the pneumatic tire includes a tread portion 1, a pair of right and left bead portions 2, and sidewall portions 3 each continuously connecting the tread portion 1 and the corresponding bead portion 2 to each other. An inner liner layer (an air permeation preventive layer) 4 is formed in an inner surface of the pneumatic tire over the entire region of the inner surface. The inner liner layer 4 is made of a thermoplastic resin or a thermoplastic elastomer composition obtained by dispersing an elastomer in a thermoplastic resin.

As illustrated in Fig. 1, a sound-absorbing member 5 made of a porous material is attached on the inner surface of the tire in a region corresponding to the tread portion 1 in such a manner as to extend over the entire circumference of the tire. As the porous material of the sound-absorbing member 5, a flexible urethane foam having open cells therein is used. In particular, the flexible urethane foam should preferably have heat resistance in consideration of suppressing heat degradation of the sound-absorbing member 5 at a curing process, and further, should preferably have no skin layer on the tire cavity side in consideration of suppressing collapse of the sound-absorbing member 5 due to pressurization at the curing process.

The ratio of the tear strength (N/cm²) to the apparent density (kg/m³) of the flexible urethane foam is 0.15 or more, and more preferably, in a range of 0.15 to 0.35. If the ratio is too small, the durability is insufficient as a sound-absorbing member. In other words, a flexible urethane foam having a small tear strength while having a high apparent density is not preferable for the sound-absorbing member. Note that, the apparent density is a density specified in JIS K7222, and the tear strength is a strength specified in JIS K6400-5.

In the pneumatic tire, a weight increase due to the addition of the sound-absorbing member 5 made of a porous material can be suppressed by the effect of a weight reduction achieved by using the inner liner layer 4 having a thermoplastic resin as a matrix.

Next, a method for manufacturing the above-described pneumatic tire will be described. Fig. 2 illustrates a green tire in the process of manufacturing the pneumatic tire illustrated in Fig. 1. The pneumatic tire is manufactured in the following manner. First, as illustrated in Fig. 2, a green tire G is formed, which includes: the inner liner layer 4 which is disposed in the inner surface of the tire and which is made of the thermoplastic resin or the thermoplastic elastomer composition obtained by dispersing the elastomer in the thermoplastic resin; and the sound-absorbing member 5 which is fixed onto the inner liner layer 4 and which is made of the porous material. Thereafter, the green tire G is cured.

As described above, the sound-absorbing member 5 made of the porous material is fixed onto the inner liner layer 4 having the thermoplastic resin as a matrix in the formation of the green tire G, and then, the green tire G is cured. Accordingly, it is possible to firmly fix the inner liner layer 4 and the sound-absorbing member 5 to each other with no presence of a release agent therebetween. Moreover, since there is no need to remove a release agent from the inner surface of the tire, the operation of mounting the sound-absorbing member 5 is facilitated.

For curing the above-described green tire G, a bladderless curing system is favorably employed. Specifically, curing is performed in which a gas is directly introduced into the inside of the green tire G without using a bladder in a curing machine. For example, when a polyester-based urethane foam is used, an inert gas is favorably used as the gas to be introduced into the inside of the green tire G. This is because the polyester-based urethane foam is excellent in mechanical strength but poor in resistance to moist heat. On the other hand, when a polyether-based urethane foam is used, a steam may be used as the gas to be introduced into the inside of the green tire G. This is because the polyether-based urethane foam is excellent in resistance to moist heat.

Employing the bladderless curing system makes it possible to avoid collapse of the sound-absorbing member 5 disposed on the inner surface of the green tire G in the curing process. Note that, when a curing system with a bladder is employed, the curing may be performed in a state where a protection member for protecting the sound-absorbing member 5 is attached onto the inner surface of the green tire G. For example, it is possible to use, on an inner side of the sound-absorbing member 5, an annular body which is resistant to heat at the curing process and also has an enough rigidity to support pressure at the curing process.

As a method for fixing the sound-absorbing member 5 onto the inner liner layer 4, a flame lamination process is preferably employed. The flame lamination process is a bonding method in which a surface of a foam is instantaneously exposed to a flame, so that a melt adhesive layer is formed in the surface, and the melt adhesive layer of the foam is attached to a sheet member. The flame lamination process is a method generally used in manufacturing automotive interior components, surface materials of sofas, and the like. The sound-absorbing member 5 made of a urethane foam having a flame laminatability and the inner liner layer 4 containing the thermoplastic resin are bonded to each other by the flame lamination process, so that an excellent adhesion is achieved. Moreover, the flame lamination process is also excellent in productivity because it does not require a long hardening time, unlike the case of using an adhesive agent.

The sound-absorbing member 5 can be fixed onto the inner liner layer 4 with an adhesive agent. Alternatively, the inner liner layer 4 and the sound-absorbing member 5 can be integrated with each other by sandwiching the sound-absorbing member 5 between the inner liner layer 4 and a locking member made of a thermoplastic resin, and then by bonding the locking member to the inner liner layer 4 by ultrasonic welding.

Although the sound-absorbing member 5 may be fixed to the green tire G after the formation thereof, the sound-absorbing member 5 may be previously fixed to a component of the green tire G. Specifically, the green tire G including the sound-absorbing member 5 may be formed as follows. First, an inner liner layer is formed by winding, on an outer peripheral side of a making drum, an inner liner member having the sound-absorbing member 5 previously fixed thereto. Then, a carcass layer is formed by winding a carcass member on an outer peripheral side of the inner liner layer. Thereafter, a cylindrical intermediate formed body including the inner liner layer and the carcass layer is inflated. Using the inner liner member having the sound-absorbing member 5 previously fixed thereto significantly facilitates the operation of mounting the sound-absorbing member 5. In particular, the operation of mounting the sound-absorbing member 5 is very easy if the sound-absorbing member 5 is attached to a strip-shaped inner liner member by the flame lamination process.

When the sound-absorbing member 5 is previously fixed to the inner liner member as described above, the sound-absorbing member 5 is required to have an elongation property larger than the lift rate of the carcass layer. Specifically, the diameter of the carcass layer increases from a time when the carcass layer is wound around the making drum to a time when a product tire including the carcass layer is completed. Here, the lift rate is defined by an increased rate of the circumferential length of the carcass layer at the tread center in the product tire with respect to the circumferential length at the time of the carcass layer being wound around the making drum. It is necessary that the elongation at break of the sound-absorbing member 5 be larger than the lift rate of the carcass layer. If the elongation of the sound-absorbing member 5 is insufficient, the sound-absorbing member 5 cannot follow the inflation of the tire in the curing process or in the process of inflating the cylindrical intermediate formed body to form the green tire G. As a result, separation or breakage of the sound-absorbing member 5 occurs. Note that, when the sound-absorbing member 5 is fixed to the green tire G after the formation thereof, such elongation property is not required.

Hereinafter, constituent materials of the inner liner layer in the present invention will be described in detail. The inner liner layer is made of a thermoplastic resin or a thermoplastic elastomer composition obtained by dispersing an elastomer in a thermoplastic resin.

Examples of the thermoplastic resin to be used in the present invention include: polyamide resins (for example, nylon 6 (N6), nylon 66 (N66), nylon 46 (N46), nylon 11 (N11), nylon 12 (N12), nylon 610 (N610), nylon 612 (N612), nylon 6/66 copolymer (N6/66), nylon 6/66/610 copolymer (N6/66/610), nylon MXD6, nylon 6T, nylon 6/6T copolymer, nylon 66/PP copolymer, nylon 66/PPS copolymer); polyester resins (for example, aromatic polyesters, such as polybutylene terephthalate (PBT), polyethylene terephthalate (PET), polyethylene isophthalate (PEI), polybutylene terephthalate/tetramethylene glycol copolymer, PET/PEI copolymer, polyarylate (PAR), polybutylene naphthalate (PBN), liquid crystal polyester, polyoxyalkylene diimide diacid/polybutylene terephthalate copolymer); polynitrile resins (for example, polyacrylonitrile (PAN), polymethacrylonitrile, acrylonitrile/styrene copolymer (AS), methacrylonitrile/styrene copolymer, methacrylonitrile/styrene/butadiene copolymer); poly(meth)acrylate resins (for example, polymethyl methacrylate (PMMA), polyethyl methacrylate, ethylene/ethyl acrylate copolymer (EEA), ethylene/acrylic acid copolymer (EAA), ethylene methyl acrylate resin (EMA)) ; polyvinyl resins (for example, ethylene-vinyl acetate (EVA), polyvinyl alcohol (PVA), ethylene/vinyl alcohol copolymer (EVOH), polyvinylidene chloride (PVDC), polyvinyl chloride (PVC), vinyl chloride/vinylidene chloride copolymer, vinylidene chloride/methyl acrylate copolymer); cellulose resins (for example, cellulose acetate, cellulose acetate butyrate); fluororesins (for example, polyvinylidene difluoride (PVDF), polyvinylfluoride (PVF), polychlorotrifluoroethylene (PCTFE), ethylene/tetrafluoroethylene copolymer (ETFE)); and imide resins (for example, aromatic polyimide (PI)).

Examples of the elastomer to be used in the present invention include: diene rubbers and their hydrogenated products (for example, NR, IR, epoxidized natural rubber, SBR, BR (high cis BR and low cis BR), NBR, hydrogenated NBR, hydrogenated SBR), olefin rubbers (for example, ethylene propylene rubbers (EPDM, EPM), maleic acid-modified ethylene propylene rubber (M-EPM)), isobutylene isoprene rubber (IIR), isobutylene and aromatic vinyl or diene monomer copolymer, acrylic rubber (ACM), ionomers, halogenated rubbers (for example, Br-IIR, Cl-IIR, brominated isobutylene para-methyl styrene copolymer (Br-IPMS), chloroprene rubber (CR), hydrin rubbers (CHC, CHR), chlorosulfonated polyethylene (CSM), chlorinated polyethylene (CM), maleic acid-modified chlorinated polyethylene (M-CM)), silicone rubbers (for example, methyl vinyl silicone rubber, dimethyl silicone rubber, methylphenylvinyl silicone rubber), sulfur-containing rubbers (for example, polysulfide rubber), fluoro rubbers (for example, vinylidene fluoride rubbers, fluorine-containing vinyl ether rubbers, tetrafluoro ethylene-propylene rubbers, fluorine-containing silicone rubbers, fluorine-containing phosphazene rubbers), thermoplastic elastomers (for example, styrene elastomers, olefin elastomers, polyester elastomers, urethane elastomers, polyamide elastomers).

In the thermoplastic elastomer composition to be used in the present invention, the composition ratio of the thermoplastic resin component (A) and the elastomer component (B) may be determined as appropriate in consideration of the balance between the thickness and the flexibility of the film layer, but is preferably in a range of 10/90 to 90/10, and more preferably in a range of 20/80 to 85/15 (in weight ratio).

As the third component, another polymer such as a compatibilizer, or a compounding ingredient may be mixed with the thermoplastic elastomer composition according to the present invention, in addition to the above-described essential components (A) and (B). Another polymer is mixed for the purpose of, for example, improving the compatibility of the thermoplastic resin component with the elastomer component, enhancing the processability and formability of the materials into films, improving the heat resistance, and reducing the manufacturing costs. Examples of the materials for these purposes include polyethylene, polypropylene, polystyrene, ABS, SBS, polycarbonate, and the like.

The thermoplastic elastomer composition is obtained by previously melting and kneading a thermoplastic resin and an elastomer (an uncured rubber in the case of a rubber) in a twin-screw kneading extruder or the like so as to disperse the elastomer component in the thermoplastic resin having a continuous phase formed therein. In curing the elastomer component, a curing agent may be added to the elastomer component during the kneading so that the elastomer may be dynamically cured. In addition, various kinds of compounding ingredients (excluding a curing agent) can be added to the thermoplastic resin or the elastomer component in the above-described kneading process, but preferably is mixed thereto in advance before the kneading process. The kneading machine to be used for kneading the thermoplastic resin and the elastomer is not particularly limited, and may be a screw extruder, a kneader, a Banbury mixer, a twin-screw kneading extruder, or the like. Among these, the twin-screw kneading extruder is preferably used for kneading the resin component and the rubber component, and dynamically curing the rubber component. Further, two or more kinds of kneading machines may be used to sequentially perform kneading processes. As the conditions for the melting and kneading process, the temperature is preferably not less than a temperature at which the thermoplastic resin is melted. In addition, the shear rate during the kneading is preferably in a range of 2500 sec⁻¹ to 7500 sec⁻¹. The total time required for the kneading is preferably in a range of 30 seconds to 10 minutes. If the curing agent is added, the time required for the curing after the addition is preferably in a range from 15 seconds to 5 minutes. The thermoplastic elastomer composition prepared in the above-described method is formed into a film by using a resin extruder or by calendaring. As the method for forming a film, any of generally-employed methods for forming the thermoplastic resin or the thermoplastic elastomer into a film may be employed.

A thin film of the thermoplastic elastomer composition obtained in the above-described manner has a structure in which the elastomer is dispersed as a non-continuous phase in the matrix of the thermoplastic resin. Employing such a dispersion structure allows the Young's modulus to be set in a range of 1 MPa to 500 MPa, and thus provides an appropriate stiffness as a constituent member of the tire.

The thermoplastic resin or the thermoplastic elastomer composition described above may be formed into a sheet or a film, and then be stacked as a single body onto another constituent member of the tire. In addition, an adhesive layer may be stacked in order to enhance the adhesion with a rubber adjacent to the thermoplastic resin or thermoplastic elastomer composition. Specific examples of the adhesive polymer forming the adhesive layer include: an ultra high molecular weight polyethylene (UHMWPE) having a molecular weight of one million or more, and preferably three million or more; acrylate copolymers such as ethylene-ethylacrylate copolymer (EEA), ethylene-methylacrylate resin (EMA) and ethyleneacrylic acid copolymer (EAA), and the like, as well as their maleic anhydride adduct; polypropylene (PP) and maleic acid-modified products thereof; ethylene-propylene copolymer and maleic acid-modified products thereof; polybutadiene resin and maleic anhydrate-modified products thereof; styrenebutadiene-styrene copolymer (SBS); styrene-ethylene-butadiene-styrene copolymer (SEBS); thermoplastic fluororesins; thermoplastic polyester resins; and the like. These polymers may be formed into a sheet or film by being extruded with, for example, a resin extruder by a generally-used method. The thickness of the adhesive layer is not particularly limited, but is favorably small in consideration of weight reduction of the tire. The thickness of the adhesive layer is thus preferably in a range of 5 µm to 15 µm.

Although the illustrated embodiments of the present invention have been described in detail so far, it should be understood that various modifications, substitutions, and replacements may be made thereon without departing from the scope of the present invention defined by the attached claims.

### Examples

Pneumatic tires were manufactured by various different manufacturing methods (Examples 1 and 2 as well as Comparative Examples 1 to 3). Each of the pneumatic tires had a tire size of 215/60R16 95H, and included a sound-absorbing member made of a urethane foam and fixed to an inner liner layer in an inner surface of the tire. Note that, although the lift rate of the carcass layer in the process of manufacturing the above-described pneumatic tires was 140%, the urethane foam used was one having an elongation of 160%.

The pneumatic tire of Example 1 was manufactured as follows. An inner liner layer made of a thermoplastic elastomer composition obtained by dispersing an elastomer (brominated isobutylene isoprene rubber) in a thermoplastic resin (nylon 6, 66) was employed. A green tire was formed in which a sound-absorbing member made of a flexible urethane foam was fixed onto the inner liner layer by a flame lamination process. Thereafter, the green tire was cured.

The pneumatic tire of Example 2 was manufactured as follows. An inner liner layer made of the same thermoplastic elastomer composition as that in Example 1 was employed. A green tire was formed in which a sound-absorbing member made of a flexible urethane foam was fixed onto the inner liner layer with an adhesive agent. Thereafter, the green tire was cured.

The pneumatic tire of Comparative Example 1 was manufactured as follows. A green tire employing an inner liner layer made of the same thermoplastic elastomer composition as that in Example 1 was formed. After the green tire was cured, a sound-absorbing member made of a flexible urethane foam was fixed onto the inner liner layer with an adhesive agent.

The pneumatic tire of Comparative Example 2 was manufactured as follows. A green tire employing an inner liner layer made of a rubber composition mainly containing isobutylene isoprene rubber was formed. After the green tire was cured, a sound-absorbing member made of a flexible urethane foam was fixed onto the inner liner layer with an adhesive agent.

The pneumatic tire of Comparative Example 3 was manufactured as follows. A green tire employing an inner liner layer made of a rubber composition mainly containing isobutylene isoprene rubber was formed. After the green tire was cured, a sound-absorbing member made of a flexible urethane foam was fixed onto the inner liner layer with a double-sided adhesive tape.

Each of the pneumatic tires of Examples 1 and 2 as well as Comparative Examples 1 to 3 was evaluated in terms of durability, peel force, and mass, by the following testing methods. The results of the evaluations are shown in Table 1.

### Durability:

Each of the test tires was subjected to a drum durability test under conditions of a high load with a low pressure. After the test, occurrence of separation or breakage of the sound-absorbing member was examined. The results of the evaluations are each indicated by "GOOD" when no separation or breakage was observed at all, by "FAIR" when a little separation or breakage was observed, or by "POOR" when occurrence of separation or breakage was significant.

### Peel Force:

Each of the test tires was subjected to a measurement of peel force required for the sound-absorbing member to be peeled off the inner liner layer. The results of the evaluations are indicated by indices where the result of Comparative Example 1 is taken as an index of 100. The larger the index is, the more difficult the sound-absorbing member was to peel off.

### Mass:

The mass of each of the test tires was measured. The results of the evaluations are indicated by indices where the result of Comparative Example 1 is taken as an index of 100. The smaller the index is, the less the mass of the tire is.

**[Table 1]**

| | Example 1 | Example 2 | Comparative Example 1 | Comparative Example 2 | Comparative Example 3 |
|---|---|---|---|---|---|
| Inner Liner Layer | Thermoplastic Elastomer Composition | Thermoplastic Elastomer Composition | Thermoplastic Elastomer Composition | Isobutylene Isoprene Rubber | Isobutylene Isoprene Rubber |
| Sound-absorbing Member | Urethane Foam | Urethane Foam | Urethane Foam | Urethane Foam | Urethane Foam |
| Time to Fix Sound-absorbing Member | Before Curing Process | Before Curing Process | After Curing Process | After Curing Process | After Curing Process |
| Method for Fixing Sound-absorbing Member | Flame Lamination | Adhesive Agent | Adhesive Agent | Adhesive Agent | Double-sided Adhesive Tape |
| Durability | GOOD | GOOD | FAIR | FAIR | POOR |
| Peel Force (Index) | 115 | 110 | 100 | 100 | 60 |
| Mass (Index) | 99 | 100 | 100 | 105 | 105 |

As is clear from Table 1, both of the pneumatic tires of Examples 1 and 2 were excellent in durability and peel force of the sound-absorbing member as compared with those of Comparative Examples 1 to 3. In other words, in Examples 1 and 2, the fixation of the sound-absorbing member onto the inner surface of the tire was able to be improved with no troublesome operation being performed, such as the removing of a release agent from the inner surface of the tire, unlike the conventional tires.

## Claims

1. A method for manufacturing a pneumatic tire, comprising the steps of:
forming a green tire including an inner liner layer (4) and a sound-absorbing member (5), the inner liner layer disposed in an inner surface of the tire and made of any one of a thermoplastic resin and a thermoplastic elastomer composition obtained by dispersing an elastomer in a thermoplastic resin, the sound-absorbing member fixed onto the inner liner layer and made of a porous material; and thereafter
curing the green tire.

2. The method for manufacturing a pneumatic tire according to claim 1, wherein the green tire is cured by a bladderless curing system.

3. The method for manufacturing a pneumatic tire according to claim 1, wherein the sound-absorbing member (5) is disposed on the inner surface of the tire in a region corresponding to a tread portion (1) in such a manner as to extend over an entire circumference of the tire.

4. The method for manufacturing a pneumatic tire according to any one of claims 1 to 3, wherein the porous material of the sound-absorbing member (5) is a urethane foam having open cells therein.

5. The method for manufacturing a pneumatic tire according to claim 4, wherein a ratio of a tear strength (N/cm²) to an apparent density (kg/m³) of the urethane foam is 0.15 or more.

6. The method for manufacturing a pneumatic tire according to claim 4, wherein the sound-absorbing member (5) is fixed onto the inner liner layer (4) by a flame lamination process.

7. The method for manufacturing a pneumatic tire according to claim 4, wherein the sound-absorbing member (5) is fixed onto the inner liner layer (4) with an adhesive agent.

8. The method for manufacturing a pneumatic tire according to claim 4, wherein
in the step of forming the green tire,
the inner liner layer (4) is first formed by winding an inner liner member on an outer peripheral side of a making drum, the inner liner member having the sound-absorbing member (5) previously fixed thereto;
a carcass layer is then formed by winding a carcass member on an outer peripheral side of the inner liner layer; and thereafter,
a cylindrical intermediate formed body including the inner liner layer (4) and the carcass layer is inflated, so that the green tire is formed.

9. The method for manufacturing a pneumatic tire according to claim 8, wherein the sound-absorbing member (5) has an elongation property larger than a lift rate of the carcass layer.

## Patentansprüche

1. Verfahren zur Herstellung eines Luftreifens, umfassend die Schritte:
Formen eines Reifenrohlings, der eine innere Auskleidungsschicht (4) und ein geräuschabsorbierendes Element (5) beinhaltet, worin die innere Auskleidungsschicht an einer inneren Oberfläche des Reifens angebracht ist und aus irgendeinem aus einem thermoplastischen Harz und einer thermoplastischen Elastomerzusammensetzung, die durch Dispergieren eines Elastomers in einem thermoplastischen Harz erhalten wird, hergestellt ist, wobei das geräuschabsorbierende Element auf der inneren Auskleidungsschicht fixiert ist und aus einem porösen Material hergestellt ist; und danach
Härten des Reifenrohlings.

2. Verfahren zur Herstellung eines Luftreifens gemäß Anspruch 1, worin der Reifenrohling durch ein balgloses Härtungssystem gehärtet wird.

3. Verfahren zur Herstellung eines Luftreifens gemäß Anspruch 1, worin das geräuschabsorbierende Element (5) auf der inneren Oberfläche des Reifens in einem Bereich, der einem Laufflächenabschnitt (1) entspricht, in einer Weise angebracht ist, sodass es sich um den gesamten Umfang des Reifens erstreckt.

4. Verfahren zur Herstellung eines Luftreifens gemäß irgendeinem der Ansprüche 1 bis 3, worin das poröse Material des geräuschabsorbierenden Elements (5) ein Urethanschaum mit offenen Zellen darin ist.

5. Verfahren zur Herstellung eines Luftreifens gemäß Anspruch 4, worin das Verhältnis von Reißfestigkeit (N/cm²) zur scheinbaren Dichte (kg/m³) des Urethanschaums 0,15 oder mehr ist.

6. Verfahren zur Herstellung eines Luftreifens gemäß Anspruch 4, worin das geräuschabsorbierende Element (5) auf der inneren Auskleidungsschicht (4) durch ein Flammlaminierungsverfahren fixiert ist.

7. Verfahren zur Herstellung eines Luftreifens gemäß Anspruch 4, worin das geräuschabsorbierende Element (5) auf der inneren Auskleidungsschicht (4) mit einem Adhäsivmittel fixiert ist.

8. Verfahren zur Herstellung eines Luftreifens gemäß Anspruch 4, worin im Schritt des Bildens des Reifenrohlings
die innere Auskleidungsschicht (4) zuerst durch Aufwickeln eines inneren Auskleidungselements auf die äußere Umfangsseite einer Herstellungstrommel gebildet wird, worin auf dem inneren Auskleidungselement das geräuschabsorbierende Element (5) vorher fixiert wurde;
eine Karkassenschicht danach durch Aufwickeln eines Karkassenelements um eine äußere Umfangsseite der inneren Auskleidungsschicht gebildet wird; und danach
ein zylindrischer Zwischenprodukt-Formkörper, der die innere Auskleidungsschicht (4) und die Karkassenschicht beinhaltet, aufgeblasen wird, sodass der Reifenrohling gebildet wird.

9. Verfahren zur Herstellung eines Luftreifens gemäß Anspruch 8, worin das geräuschabsorbierende Element (5) eine Dehnungseigenschaft hat, die größer als eine Heberate der Karkassenschicht ist.

## Revendications

1. Procédé de fabrication d'un bandage pneumatique, comprenant les étapes consistant à :
former un pneu vert comprenant une couche de calandrage interne (4) et un organe phono-absorbant (5), la couche de calandrage interne étant disposée dans une surface interne du pneu et constituée de l'une d'une composition de résine thermoplastique ou d'élastomère thermoplastique obtenue en dispersant un élastomère dans une résine thermoplastique, l'organe phono-absorbant étant fixé sur la couche de calandrage interne et constitué d'un matériau poreux ; et ensuite
vulcaniser le pneu vert.

2. Procédé de fabrication d'un bandage pneumatique selon la revendication 1, dans lequel le pneu vert est vulcanisé par un système de vulcanisation sans vessie.

3. Procédé de fabrication d'un bandage pneumatique selon la revendication 1, dans lequel l'organe phono-absorbant (5) est disposé sur la surface interne du pneu dans une région correspondant à une portion de bande de roulement (1) de façon à s'étendre sur une circonférence entière du pneu.

4. Procédé de fabrication d'un bandage pneumatique selon l'une quelconque des revendications 1 à 3, dans lequel le matériau poreux de l'organe phono-absorbant (5) est une mousse d'uréthane ayant des cellules ouvertes.

5. Procédé de fabrication d'un bandage pneumatique selon la revendication 4, dans lequel un rapport entre une résistance au déchirement (N/cm²) et une masse volumique apparente (kg/m³) de la mousse d'uréthane est de 0,15 ou plus.

6. Procédé de fabrication d'un bandage pneumatique selon la revendication 4, dans lequel l'organe phono-absorbant (5) est fixé sur la couche de calandrage interne (4) par un processus de doublage à la flamme.

7. Procédé de fabrication d'un bandage pneumatique selon la revendication 4, dans lequel l'organe phono-absorbant (5) est fixé sur la couche de calandrage interne (4) avec un agent adhésif.

8. Procédé de fabrication d'un bandage pneumatique selon la revendication 4, dans lequel
dans l'étape de formation du pneu vert,
la couche de calandrage interne (4) est tout d'abord formée en enroulant un organe de calandrage interne sur un côté périphérique externe d'un tambour de fabrication, l'organe de calandrage interne ayant l'organe phono-absorbant (5) préalablement fixé sur lui ;
une couche de carcasse est alors formée en enroulant un organe de carcasse sur un côté périphérique externe de la couche de calandrage interne ;
et ensuite,
un corps intermédiaire cylindrique formé comprenant la couche de calandrage interne (4) et la couche de carcasse est gonflé, de façon à ce que le pneu vert soit formé.

9. Procédé de fabrication d'un bandage pneumatique selon la revendication 8, dans lequel l'organe phono-absorbant (5) a une propriété d'allongement supérieure à un taux de portance de la couche de carcasse.
